# EUROPÄISCHE PATENTSCHRIFT

(11) **EP 1 102 728 B1**
(45) Veröffentlichungstag und Bekanntmachung des Hinweises auf die Patenterteilung: **09.10.2002**
(21) Anmeldenummer: 99940002.1
(22) Anmeldetag: 13.07.1999
(51) Int. Cl.: C04B 28/06, C04B 22/14

(54) **SHIGAIT BILDENDE BINDEMITTELMISCHUNG**
SHIGAIT FORMING BINDER MIXTURE
MELANGE LIANT FORMANT DE LA SHIGAITE

(30) Priorität: 17.07.1998 DE 19832127
(43) Veröffentlichungstag der Anmeldung: 30.05.2001
(73) Patentinhaber: ARDEX GMBH, D-58453 Witten-Annen (DE)
(72) Erfinder: OBERSTE-PADTBERG, Rüdiger, D-42111 Wuppertal (DE); PÖLLMANN, Herbert, D-90765 Fürth (DE)
(74) Vertreter: Minderop, Ralph H., Dr. rer. nat.
(86) Internationale Anmeldenummer: EP9904909
(87) Internationale Veröffentlichungsnummer: WO00003958

(56) Entgegenhaltungen:
- EP-A- 0 162 276
- WO-A-91/15435
- FR-A- 2 673 934
- PATENT ABSTRACTS OF JAPAN vol. 005, no. 045 (C-048), 25. März 1981 (1981-03-25) & JP 55 167223 A (SUMITOMO CEMENT CO LTD), 26. Dezember 1980 (1980-12-26)
- PATENT ABSTRACTS OF JAPAN vol. 1998, no. 06, 30. April 1998 (1998-04-30) & JP 10 043772 A (HAZAMA GUMI LTD), 17. Februar 1998 (1998-02-17)
- PATENT ABSTRACTS OF JAPAN vol. 007, no. 171 (C-178), 28. Juli 1983 (1983-07-28) & JP 58 079072 A (DENKI KAGAKU KOGYO KK), 12. Mai 1983 (1983-05-12)

## Beschreibung

Die Erfindung betrifft eine trockene, pulverförmige Bindemittelmischung, die nach Zugabe von Wasser härtet, und deren Verwendung als Baustoff.

In Bau- und Bauhilfsstoffen werden als Bindemittel hauptsächlich Portlandzemente, Calciumsulfate mit unterschiedlichen Kristallwassergehalten, Kalk, Tonerdezemente oder deren Gemische verwendet. Während portlandzementgebundene Baustoffe sich besonders in witterungsbelasteten Bereichen eignen, in denen eine hohe Frost/Tau-Wechselbeständigkeit sowie hohe Beständigkeit gegenüber atmosphärischen Einflüssen erforderlich ist, werden Calciumsulfat und Tonerdezement enthaltende Bauprodukte, bedingt durch deren mangelnde Witterungsbeständigkeit, hauptsächlich im Innenbereich von Gebäuden eingesetzt. Solche Produkte, deren Bindemittel auf Mischungen aus Tonerdezement, Calciumsulfaten, Kalk und/oder Portlandzement beruhen, zeichnen sich aber durch einen besonders hohen Frühfestigkeitsaufbau sowie in geeigneten Formulierungen durch ein hohes Wasserbindungsvermögen und somit einen hohen Selbsttrocknungseffekt aus.

Der Erfindung liegt die Aufgabe zugrunde, Baustoffe bereitzustellen, welche einerseits witterungsstabil sind und andererseits bei hohen Endfestigkeiten eine hohe Frühfestigkeitsausbildung gestatten und ein hohes Wasserbindungsvermögen aufweisen.

Gelöst wird diese Aufgabe durch eine pulverförmige Bindemittelmischung, die Calciumaluminatträger in einem Anteil von 50 bis 95 Gew.% und Mangansulfat in einem Anteil von 5 bis 45 Gew.%, jeweils bezogen auf das Gewicht der Bindemittelmischung, enthält. Gemäß einer weiteren Ausführungsform der Erfindung wird diese Aufgabe durch eine Bindemittelmischung gelöst, die anstelle des Calciumaluminats und/oder Calciumaluminatzements Calciumsulfoaluminatzement enthält.

Es hat sich überraschend gezeigt, daß durch die erfindungsgemäße Bindemittelmischung nach Zugabe von Wasser beim Abbinden unter anderem das Mineral Shigait, eine Ca-Mn-Al-K-Na-SO₃-CO₂-H₂O-Verbindung, gebildet wird. Diese Mineral kommt natürlich vor und ist unter anderem beschrieben in The Canadian Mineralogist, Vol. 34, pp 91-97 (1996). Über geologische Zeiträume hat dieses Mineral seine Beständigkeit gegen atmosphärische Einflüsse bewiesen. Darüber hinaus besitzt dieses Mineral die Eigenschaft, mit 21 Molekülen Wasser auf eine Formeleinheit wesentlich mehr Wasser kristallin zu binden als andere Zementhydratphasen, abgesehen von Ettringit. Ettringit besitzt allerdings den Nachteil einer verminderten Witterungsstabilität.

Überraschend hat sich ferner gezeigt, daß die häufig in der Baustofftechnologie als Abbindeverzögerer benutzten Alkaliglukonate in der erfindungsgemäßen Bindemittelmischung das Abbinden beschleunigen und eine die Festigkeitsentwicklung begünstigende Wirkung besitzen. Als Alkaliglukonat wird vorzugsweise Natriumglukonat verwendet. Alkaliglukonate können in einem Anteil von 0,1 bis 5 Gew.%, vorzugsweise 0,7 bis 2,5 Gew.%, bezogen auf das Gewicht der Bindemittelmischung, eingesetzt sein.

Calciumaluminate können in der erfindungsgemäßen Bindemittelmischung in Form von Tonerdezement als Calciumaluminatträger enthalten sein. Zusätzlich zu Calciumaluminat oder einem Calciumaluminatträger kann der Bindemittelmischung Calciumsulfoaluminatzement zugesetzt sein.

Calciumaluminate können in der erfindungsgemäßen Bindemittelmischung in einem Anteil von mindestens etwa 40 Gew.%, vorzugsweise 60 bis 80 Gew.%, bezogen auf das Gewicht der Bindemittelmischung, enthalten sein. Calciumaluminate können in unterschiedlichen Verhältnissen CaO : Al₂O₃ vorliegen.

Mangansulfat kann in dem erfindungsgemäßen Bindemittelgemisch in Form von Wasser enthaltenden oder wasserfreien Mangansulfaten vorliegen. Das Gemisch kann somit beispielsweise Mangangansulfat, Mangansulfathydrat oder deren Gemische enthalten. Mangansulfate lassen sich auch in Form von Reststoffen einsetzen.

Alkaliverbindungen können in einer Menge von 0,1 bis 8 Gew.%, vorzugsweise 0,2 bis 3 Gew.%, bezogen auf das Gewicht der Bindemittelmischung, eingesetzt werden. Besonders bevorzugt ist der Einsatz von Natriumcarbonat.

Die erfindungsgemäße Bindemittelmischung kann ferner Calciumoxid, Calciumhydroxid und/oder ein portlandzementklinkerhaltiges Material enthalten. Letzteres kann in einer Menge von 2 bis 30 Gew.%, vorzugsweise 5 bis 20 Gew.%, bezogen auf das Gewicht der Bindemittelmischung, eingesetzt werden. Das erfindungsgemäß enthaltene Mangansulfat kann teilweise durch Calciumsulfatträger ersetzt sein.

Den erfindungsgemäßen Bindemittelmischungen könen mineralische Füllstoffe zugesetzt sein. Mineralische Füllstoffe umfassen erfindungsgemäß auch mineralische Reststoffe. Zur Steuerung der Abbindegeschwindigkeit können handelsübliche Zementverzögerer und/oder Abbindebeschleuniger eingesetzt werden. Weitere bekannte Additive sind wasserreduzierende Zusätze, die Wasserretention erhöhende oder die Verformbarkeit des Baustoffs in abgebundenem Zustand beeinflussende Zusätze.

Die Erfindung wird nachfolgend durch Beispiele weiter erläutert.

### Beispiele

In den Beispielen wurde ein Tonedeschmelzzement der Firma Lafarge Aluminates eingesetzt. Bei dem Portlandzement handelt es sich um die Qualität CEM I 32,5 R.

Festigkeitsbestimmungen wurden an Mörtelprismen mit den Ausmaßen 4 x 4 x 16 cm³ nach unterschiedlichen Lagerungszeiten bei den angegebenen Lagerungsbindungen durchgeführt. Die getesteten Mörtel wurden mit einem Streckungsverhältnis von 1 Gewichtsteil Bindemittel und 4 Gewichtsteilen Sand der Körnung 0 - 8 mm hergestellt. Das Wasser/Bindemittelverhältnis wurde jeweils so gewählt, daß die jeweiligen Frischmörtel gleiche Konsistenz aufwiesen.

Die verwendeten Bindemittelzusammensetzungen sind der Tabelle 1 und die erzielten Biegezugfestigkeit (BZ) und Druckfestigkeiten (DF) der Tabelle 2 zu entnehmen.

**Tabelle 1**

| Bindemittelzusammensetzungen (in Gew.%) | | | | | | |
|---|---|---|---|---|---|---|
| Komponente/ Bindemittel | Tonerdeschmelzzement | CEM I 32,5 R | CaSO₄1/2 H₂O | MnSO₄H₂O | Na-Glukonat | sonst. Additive |
| 1 | 63,0 | 14,0 | 7,6 | 12,0 | 2,1 | 1,3 |
| 2 | 70,0 | 7,0 | - | 19,6 | 2,1 | 1,3 |
| 3 | 63,0 | 14,0 | - | 19,6 | 2,1 | 1,3 |
| 4 | 64,4 | 13,3 | - | 19,6 | 1,4 | 1,3 |

**Tabelle 2**

| Festigkeitsentwicklung von Mörteln mit Bindemitteln aus Tabelle 1 (BZ = Biegezugfestigkeit, DF = Druckfestigkeit, Lagerungsbedingungen: 23°C/50 % relative Feuchte) | | | | | | | |
|---|---|---|---|---|---|---|---|
| Bindemittelzusammensetzung | Wasser/ Bindemittel | BZ 1 d (N/mm²) | BZ 7 d (N/mm²) | BZ 28 d (N/mm²) | DF 1 d (N/mm²) | DF 7 d (N/mm²) | DF 28 d (N/mm²) |
| 1 | 0,41 | 4,3 | 7,6 | 8,3 | 21,7 | 47,6 | 53.4 |
| 2 | 0,40 | 5,4 | 4,4 | 5,5 | 34,5 | 42,1 | 44,2 |
| 3 | 0,40 | 5,5 | 6,2 | 6,4 | 34.1 | 43,9 | 48,5 |
| 4 | 0,41 | 5,6 | 6,4 | 7,6 | 24,8 | 40,9 | 46,6 |

Aus den Tabellen 1 und 2 geht hervor, daß der Einsatz von Tonerdezementbindemitteln, welche Mangansulfat enthalten, hohe Mörtelfestigkeiten erlaubt. Hier bewirkt eine erhöhte Zugabe an Natriumglukonat überraschend eine beachtliche Erhöhung der Frühfestigkeit (vergleiche 1-Tages-Druckfestigkeit von Bindemittel 3 mit Bindemittel 4).

Die höchste Endfestigkeit wurde mit Bindemittel 1 erzielt; Probekörper auf der Basis dieses Bindemittels erwiesen sich allerdings nur bedingt witterungsstabil: Nach Frost/Tau- und Wasser/Warm-Wechsellagerung zeigten Mörtel auf der Basis dieses Bindemittels Treiberscheinungen, während die Mörtel auf der Basis der Bindemittel 2 bis 4 diese Lagerungsbedingungen ohne Beschädigung und Festigkeitseinbuße überstanden.

Die Verarbeitungszeit von Bindemitteln, bestehend aus Tonerdezement, Mangansulfat und Portlandzement kann über den Zusatz von Natriumcarbonat gesteuert werden, wie aus Tabelle 3 hervorgeht.

Somit lassen sich mit dem erfindungsgemäßen Bindemittel sowohl soforttragende Baustoffe als auch solche, die auf eine gewünschte Verarbeitungszeit einstellbar sind, herstellen.

**Tabelle 3**

| Einfluß von Soda auf die Verarbeitungsszeit von MnSo₄-haltigen Bindemittelgemischen mit einem Wasser/Feststoffverhältnis von 0,3 | | | | | | |
|---|---|---|---|---|---|---|
| Komponente in Gew.%/ Bindemittel | Tonerdeschmelzzement | MnSO₄H₂O | CEM I 32,5 R | Na- Glukonat | Soda | Verarbeitungszeit |
| I | 72,45 | 13 | 12,3 | 2,25 | 0,0 | 2 min |
| II | 72,35 | 13 | 12,3 | 2,25 | 0,1 | 2 min |
| III | 72,05 | 13 | 12,3 | 2,25 | 0,4 | 9 min |
| IV | 71,95 | 13 | 12,3 | 2,25 | 0,5 | 20 min |
| V | 71,85 | 13 | 12,3 | 2,25 | 0,6 | 35 min |

## Patentansprüche

1. Pulverförmige Bindemittelmischung, enthaltend einen oder mehrere Calciumaluminatträger in einem Anteil von 50 bis 95 Gew.% und Mangansulfat in einem Anteil von 5 bis 45 Gew.%, jeweils bezogen auf das Gewicht der Bindemittelmischung.

2. Bindemittelmischung nach Anspruch 1, **dadurch gekennzeichnet, daß** als Calciumaluminatträger Tonerdezement enthalten ist.

3. Bindemittelmischung nach Anspruch 1, **dadurch gekennzeichnet, daß** als Calciumaluminatträger Calciumaluminat enthalten ist.

4. Bindemittelmischung nach Anspruch 1 oder 2, **dadurch gekennzeichnet, daß** Calciumsulfoaluminatzement enthalten ist.

5. Pulverförmige Bindemittelmischung, enthaltend Calciumsulfoaluminatzement und einen Anteil von 5 bis 45 Gew.% Mangansulfat, bezogen auf das Gewicht der Bindemittelmischung.

6. Bindemittelmischung nach einem der Ansprüche 1 bis 5, **dadurch gekennzeichnet, daß** die Bindemittelmischung etwa 40 Gew.%, insbesondere etwa 60 bis 80 Gew.%, Calciumaluminat bezogen auf das Gewicht der Bindemittelmischung, enthält.

7. Bindemittelmischung nach Anspruch 1 bis 6, **dadurch gekennzeichnet, daß** Alkaligluconate, insbesondere Natriumgluconat, enthalten sind.

8. Bindemittelmischung nach Anspruch 1 bis 7, **dadurch gekennzeichnet, daß** anorganische Alkaliverbindungen, vorzugsweise Natriumcarbonat, enthalten sind.

9. Bindemittelmischung nach Anspruch 8, **dadurch gekennzeichnet, daß** die Alkaliverbindungen in einem Anteil von 0,1 bis 8 Gew.%, vorzugsweise 0,2 bis 3 Gew.%, bezogen auf das Gewicht der Bindemittelmischung, enthalten sind.

10. Bindemittelmischung nach einem der vorherigen Ansprüche, **dadurch gekennzeichnet, daß** Calciumoxid, Calciumhydroxid und/oder ein Portlandzementklinker enthaltendes Material enthalten ist.

11. Bindemittelmischung nach Anspruch 10, **dadurch gekennzeichnet, daß** das Portlandzementklinker enthaltende Material in einem Anteil von 2 bis 30 Gew.%, vorzugsweise 5 bis 20 Gew.%, bezogen auf das Gewicht der Bindemittelmischung, in dieser vorliegt.

12. Verwendung einer Bindemittelmischung nach einem der Ansprüche 1 bis 10 in einem Baustoff.

## Claims

1. A powdered binder mixture containing one or more carriers of calcium aluminate in an amount of 50 wt% to 95 wt% and manganese sulfate in an amount of 5 wt% to 45 wt%, each based on the weight of the binder mixture.

2. The binder mixture according to Claim 1, **characterized in that** alumina cement is used as the calcium aluminate carrier.

3. The binder mixture according to Claim 1, **characterized in that** calcium aluminate is used as the calcium aluminate carrier.

4. The binder mixture according to Claim 1 or 2, **characterized in that** it contains calcium sulfoaluminate cement.

5. The powdered binder mixture containing calcium sulfoaluminate cement and manganese sulfate in an amount of 5 wt% to 45 wt%, based on the weight of the binder mixture.

6. The binder mixture according to one of Claims 1 through 5, **characterized in that** the binder mixture contains approx. 40 wt%, in particular approx. 60 wt% to 80 wt% calcium aluminate, based on the weight of the binder mixture.

7. The binder mixture according to Claims 1 through 6, **characterized in that** it contains alkali gluconates, in particular sodium gluconate.

8. The binder mixture according to Claims 1 through 7, **characterized in that** it contains inorganic alkali compounds, preferably sodium carbonate.

9. The binder mixture according to Claim 8, **characterized in that** it contains alkali compounds in an amount of 0.1 wt% to 8 wt%, preferably 0.2 wt% to 3 wt%, based on the weight of the binder mixture.

10. The binder mixture according to one of the preceding claims, **characterized in that** it contains a material containing calcium oxide, calcium hydroxide and/or a Portland cement clinker.

11. The binder mixture according to Claim 10, **characterized in that** the material containing Portland cement clinker is present in an amount of 2 wt% to 30 wt%, preferably 5 wt% to 20 wt%, based on the weight of the binder mixture.

12. Use of a binder mixture according to one of Claims 1 through 10 in a construction material.

## Revendications

1. Mélange liant pulvérulent, contenant un ou plusieurs supports aluminate de calcium en une proportion allant de 50 à 95% en poids et du sulfate de manganèse en une proportion allant de 5 à 45% en poids, chaque fois sur base du poids du mélange liant.

2. Mélange liant suivant la revendication 1, **caractérisé en ce que** du ciment alumineux est présent comme support aluminate de calcium.

3. Mélange liant suivant la revendication 1, **caractérisé en ce que** de l'aluminate de calcium est présent comme support aluminate de calcium.

4. Mélange liant suivant la revendication 1 ou 2, **caractérisé en ce que** du ciment sulfoaluminate de calcium est présent.

5. Mélange liant pulvérulent, contenant du ciment sulfoaluminate et une proportion allant de 5 à 45% en poids de sulfate de manganèse, sur base du poids du mélange liant.

6. Mélange liant suivant l'une quelconque des revendications 1 à 5, **caractérisé en ce que** le mélange liant contient environ 40% en poids, en particulier d'environ 60 à 80% en poids, d'aluminate de calcium, sur base du poids du mélange liant.

7. Mélange liant suivant l'une quelconque des revendications 1 à 6, **caractérisé en ce qu'**il contient un gluconate alcalin, en particulier le gluconate de sodium.

8. Mélange liant suivant l'une quelconque des revendications 1 à 7, **caractérisé en ce que** des composés alcalins inorganiques sont présents, de préférence du carbonate de sodium.

9. Mélange liant suivant la revendication 8, **caractérisé en ce que** les composés alcalins sont présents en une proportion allant de 0,1 à 8% en poids, de préférence de 0,2 à 3% en poids, sur base du poids du mélange liant.

10. Mélange liant suivant l'une quelconque des revendications précédentes, **caractérisé en ce qu'**il contient de l'oxyde de calcium, de l'hydroxyde de calcium et/ou un matériau contenant du clinker Portland.

11. Mélange liant suivant la revendication 10, **caractérisé en ce que** le matériau contenant du clinker Portland est présent en une proportion allant de 2 à 30%, en poids, de préférence de 5 à 20% en poids, sur base du poids du mélange liant.

12. Utilisation d'un mélange liant suivant l'une quelconque des revendications 1 à 10, dans un matériau de construction.
